(19) **Europäisches Patentamt / European Patent Office / Office européen des brevets**

(11) **EP 3 763 672 A1**

(12) **EUROPEAN PATENT APPLICATION**
published in accordance with Art. 153(4) EPC

(43) Date of publication:
**13.01.2021 Bulletin 2021/02**

(21) Application number: **18920105.6**

(22) Date of filing: **22.05.2018**

(51) Int Cl.:
**C01B 32/15** (2017.01)    **B09B 3/00** (2006.01)

(86) International application number:
**PCT/CN2018/087797**

(87) International publication number:
**WO 2019/222906 (28.11.2019 Gazette 2019/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Northeastern University**
**Shenyang, Liaoning 110819 (CN)**

(72) Inventor: **KAMALI, Ali Reza**
**Shenyang, Liaoning 110819 (CN)**

(74) Representative: **Hanna Moore + Curley**
**Garryard House**
**25-26 Earlsfort Terrace**
**Dublin 2, D02 PX51 (IE)**

(54) **METHOD FOR EXTRACTING CARBON MATERIAL FROM PLASTIC AND DEVICE THEREFOR**

(57) The invention provides a method and equipment for extracting carbon materials from plastics. Particularly, the method produces nanostructured carbon materials by heating of at least one salt (e.g., NaCl) and at least one plastic material (e.g.polyethylene terephthalate) to a temperature greater than the melting point of the said salt, in which molten state of the said salt protects the carbonaceous material from oxidation. Moreover, molten salt promotes the graphitization of carbon materials. The product is in the form of graphenenano-flakes with high conductivity and high surface area. This method provides a simple, economical and efficient approach for producing conductive carbon materials. It also has a significant positive impact on the environment through the transformation of virtually non-degradable plastic wastes into high-value conductive carbon materials.

Figure 14

## Description

## Technical Field

The present invention belongs to the field of the preparation of carbon materials and relates to a method for extracting carbon materials from plastics. Particularly, the present invention is related to the generation of graphite nanostructures with high conductivity and high surface area.

## Background

Plastics, with a global production of 335 million tons in 2016, have increasingly been employed for a large variety of structural applications in the modern life owing to their properties such as low production cost, durability, low density, high chemical resistance and dimensional stability.

Polyethylene terephthalate ($(C_{10}H_8O_4)_n$, PET) is the most commonly used plastic, often employed as container for bottled liquids and other food products due to its affordable cost, excellent mechanical properties, barrier properties and clarity. Its radiation resistant properties are also accountable for applications as insulator and nuclear track detector in nuclear plants and devices.

In fact, the consistent growing demand for bottled water has boosted the annual consumption of plastic bottles to somewhere around 500 billion across the world. Whilst only around 9% of virgin plastics are recycled in new water bottles, around 80% of the used bottles find themselves in landfills or in the oceans. The latter is estimated to be hundreds of millions of tones, adding up their microscopic plastic content to be ingested by birds, fish and other organisms, and eventually by mankind who eat seafood, creating a serious global waste management and environmental crisis, perhaps with the same level of consequences as are currently experienced by the climate change. The current trend will result in a global used plastic accumulation of about 12000 million tons in 20 years time.

Considering the fact that the natural degradation of PET takes a long time, probably over the course of several hundreds of years, its recycling or conversion is vital. Being hydrocarbons, plastics have high caloric values, and therefore have widely been considered a potential feedstock for producing $H_2$ and syngas. On the other hand, owing to its high carbon content of about 45 at% and also lack of inorganic components, PET can be considered a viable source of high purity solid carbon materials. It is worth mentioning that, particularly, carbon materials with high surface area and conductivity are of great importance due to their increasing applications in various demanding fields such as energy storage systems, conductive composites and solar energy harvesting.

PET has been used as the carbon source in some traditional methods of producing carbon nanomaterials. Heating of chopped used PET mineral water bottles to 815°C under nitrogen atmosphere, leads to the formation of a black polymer char, which was then filled into a hallow carbon tube and used as the anode in a rotating cathode arc discharge equipment, which is traditionally used for the preparation of multi walled carbon nanotubes (MWCNTs). Formation of nano-sized carbon spheres and MWCNTs was confirmed in the soot obtained at different regions of the anode and the cathode with an approximate temperature of 1700-2600 °C (A. Joseph Berkmans M. Jagannatham, S. Priyanka and P. Haridoss, Synthesis of branched, nano channeled, ultrafine and nano carbon tubes from PET wastes using the arc discharge method, Waste Management 34 (2014) 2139-2145).

To demonstrate the feasibility of using PET as the carbon source in the conventional chemical vapor deposition (CVD) growth method, Hatta et al. placed a mixture of PET and high-density polyethylene as the carbon source in the upstream of a quartz CVD tube, and iron hydroxide (FeOH) as catalyst in its center. Upon heating the system to 700-900 °C under a flow of argon carrier gas, the growth of carbon nanoballs and nanofilaments on the catalyst was reported (M.N.M.Hatta, M.S.Hashim, R. Hussin, S. Aida, Z. Kamdi, A.R. Ainunddin and M.Z. Yunos, Synthesis of carbon nanostructures from high density polyethylene (HDPE) and polyethylene terephthalate (PET) waste by chemical vapour deposition, Journal of Physics: Conference Series 914 (2017) 012029).

The conversion of PET bottles into solid carbon nanomaterials may provide agricultural and environmental opportunities. However, in order to evaluate the value of carbon products obtained by the pyrolysis of PET, and therefore the economic viability of the process, it is highly desirable to characterise carbon products, not only in terms of morphology, but also in terms of crystallinity, defects level, surface area and electrical conductivity. These properties, which are important in a variety of applications, often are characterised using a combination of techniques including electron microscopy, conductivity measurements as well as X-ray diffraction and Raman spectroscopy. The later has been widely employed in the literature as a powerful method for the qualitative and quantitative characterisation of carbon materials, since it provides explicit insights into the layer structure, crystallinity and defects. For example, in graphitic materials, it is known that the so-called Raman G band is related to the vibration of $sp^2$ bonded carbon atoms in a two dimensional hexagonal lattice while the Raman D-band is attributed to the structural defects. Also, the Raman 2D band is sensitive to the number of layers. Consequently, the ratio of the intensity of Raman bands 2D/G ($I_{2D}/I_G$) and D/G ($I_D/I_G$) in graphite-based materials correspond to the density of defects and the quality of graphene flakes, respectively, and therefore to the conductivity of the material. Generally speaking, a higher $I_D/I_G$ value can be measured in graphitic materials with a lower value of $I_{2D}/I_G$ and electrical conductivity. For instance, reduced graphene oxide (RGO) material with an $I_D/I_G$ value of 1.02, 1.19 and 1.55 exhibited an $I_{2D}/I_G$ value of 0.14, 0.07 and 0.01, and an electric conductivity of 166, 133 and 69 S m$^{-1}$, respectively. In line with this trend, a RGO foam produced using GO and Ni foam showed a low $I_D/I_G$ value of 0.92 and, consequently, a high conductivity of 1600 S m$^{-1}$ (P. Yu, X. Zhao, Z. Huang, Y. Lia and Q. Zhang, Free-standing three-dimensional graphene and polyaniline nanowire arrays hybrid foams for high-performance flexible and lightweight supercapacitors, Journal of Materials Chemistry A 2 (2014) 14413-14420).

With this in mind, the quality of PET-derived carbon materials can be reviewed from the literature. El Essawy et al. heated pieces of crushed PET water bottlesin an enclosed stainless steel autoclave reactor at 800°C for 1h, leading to the formation of a highly disordered carbon material characterised by the presence of weak Raman G and D bands with an $I_D/I_G$ value of 1.13 (N. A. El Essawy, S. M. Ali, H. A. Farag, A. H. Konsowa, M. Elnouby and H. A. Hamad, Green synthesis of graphene from recycled PET bottle wastes for use in the adsorption of dyes in aqueous solution, Ecotoxicology and Environmental Safety 145 (2017) 57-68. PET has been used as the carbon precursor for the preparation of activated carbon. Rai.et al. pyrolysed PET under a $N_2$ flow at 400°C for 1 h, and thereafter, at 725°C for 2 h. The carbonized char obtained was then grounded and heated at 925°C for 1h in $N_2$, followed by heating in $CO_2$ for 2 h. After cooling down in $N_2$, the activated carbon obtained exhibited a surface area of 659.6 m$^2$ g$^{-1}$ with an $I_D/I_G$ value of 1.04 and a very weak 2D Raman band (P. Rai and K. P. Singh, Valorization of Poly (ethylene) terephthalate (PET) wastes into magnetic carbon for adsorption of antibiotic from water: Characterization and application, Journal of Environmental Management 207 (2018) 249-261) .

In another work, PET was pyrolysed at 725°C in $N_2$, leading to the formation of gaseous compounds (58%, CO, $CO_2$ and hydrocarbons), terephthalic acid (20%) and a blacksolidchar residue which was retrieved from the bottom of the reactor. After grinding, the char underwent $CO_2$ activation at 925°C in $N_2$ for 1 h, and then in $CO_2$, followed by various burning-off treatments in the range 12-76%. The activated carbon obtained showed a BET surface area in the range 340 -2468 m$^2$ g$^{-1}$ and a value of $I_D/I_G$ in the range 0.76 ~1.24, respectively (J.B. Parra, C.O. Ania, A. Arenillas, F. Rubiera, J.J. Pis andJ.M. Palacios, Structuralchanges in polyethylene terephthalate (PET) waste materials caused by pyrolysis and CO2 activation, Adsorption Science & Technology 24 (2006) 439-449).

As it can be realised from the literature, although PET represents an interesting source of solid carbon, its processing towards the preparation of carbon materials requires multi-steps treatments and often results in the formation of low graphitised carbons which inevitably suffer from low conductivity. This characteristics highly limits the possible applications of the carbon product, and hence the viability of PET as the carbon source. It is an unfortunate, since there are increasing massive amounts of waste PET which can be considered as low cost carbon sources. It is not to mention that the transformation of plastic wastes to valuable useful materials is accompanied with a highly positive environmental impact.

In the current invention, molten salt treatment of PET is proposed for the preparation of a carbon nanomaterial possessing a combination of interesting properties such as high surface area (522.54 m$^2$ g$^{-1}$), a low value of $I_D/I_G$ (0.47) and a high value of $I_{2D}/I_G$ (0.52), resulting in an impressive electric conductivity of 1143 S m$^{-1}$ obtained under a compressive pressure of 6.13 MPa corresponding a bulk density of 1.04 g cm$^{-3}$. It is by far the highest quality carbon material which has been derived from plastics so far, using a single step molten salt process.

## Summary

In order to overcome the deficiency of the existing technologies, the present invention discloses a very effective method to prepare nanostructured graphitic carbon materials from the plastic. The method is based on heating of a plastic or a mixture of different types of plastics with an inorganic metal halide or a mixture of different types of inorganic metal halide salts to a temperature greater than the melting point of the said salt or the said mixture of different types of inorganic metal halide salts.

Technical solutions of the invention:

A method of extracting nanostructured carbon materials from plastic by heating a mixture containing of at least one plastic and at least one metal halide salt. The heating temperature is defined as follows: The melting point of the said metal halide salt $\leq$ heating temperature $\leq$ boiling point of the said metal halide salt + 50°C.

Further, the above-mentioned metal halide salts can be hydrated metal halide salts.

Further, the above-mentioned heating temperature can be greater than the melting point of the said metal halide salt and less than the boiling point of the said metal halide salt. In this condition, after cooling down to the room temperature, a mixture of nanostructure carbon material and solidified salt is obtained. The nanostructured carbon material can be retrieved by dissolving of the said salt in water, followed by filter of the suspension. The said salt can be recycled from filtration solution, and the nanostructured carbon can be obtained by drying the filtrate.

Further, the electrical conductivity of the nanostructure carbon material generated is greater than 1000 S m$^{-1}$ or the value of Raman $I_D/I_G$ is less than 0.5.

Further, the above-mentioned salt can be a single metal halide salt or a mixture of more than one metal halide salts selected form the group consisting of LiCl, NaCl, KCl, $MgCl_2$, $CaCl_2$, NaF and $ZnCl_2$. The above-mentioned salt can also be a single hydrated metal halide salt or a mixture of more than one hydrated metal halide salts selected form the group consisting of hydrated forms of LiCl, NaCl, KCl, $MgCl_2$, $CaCl_2$, NaF and $ZnCl_2$.

Further, the above mentioned plastics include at least one of polyethylene (PE, $C_2H_4$), polypropylene (PP, $(C_3H_6)_n$), polyethylene terephthalate (PET, $(C_{10}H_8O_4)_n$), polystyrene (PS, $(C_8H_8)_n$), polyvinyl chloride (PVC, $(C_2HCl_3)_n$), polylactic acid (PLA, $(C_3H_4O_2)_n$), polycarbonate (PC, $C_{16}H_{18}O_5$), acrylic (PMMA, $(C_5O_2H_8)_n$), nylon (PA, $(C_{12}H_2N_2O_2)_n$) or acrylonitrile butadiene styrene (ABS, $(C_8H_8 \cdot C_4H_6 \cdot C_3H_3N)_n$) or synthetic polymer with a backbone made up of carbon-carbon bonds such as synthetic rubbers.

Further, the heat treatment is carried out in air, inert gas atmosphere, nitrogen atmosphere, or vacuum conditions. The heating atmosphere can be an inert gas or nitrogen atmosphere, which contains $H_2$ above 0.1% volume fraction.

Further, the product is a nanostructured carbon material possessing one or more of the following characteristics: the surface area of greater than 500 $m^2 g^{-1}$, the capacitance value of greater than 70 F $g^{-1}$, a graphitic structure with a symmetrical Raman 2D band, containing less than 20 layers of graphene. The graphitic crystallites of the nanostructured carbon product have a thickness of less than 10 nm.

Further, the metal halide salt is NaCl, the plastic is polyethylene terephthalate (PET), the heating temperature is more than 1100 °C; preferably more than 1300 °C.

The above method of extracting carbon material from plastic is based on the following equipment, which comprises a tunnel furnace with a moving load bracket, which is made of refractory materials or is laid with alumina fragments on a metal rail. The heating elements are mounted on the upper part of the tunnel furnace is mounted on refractory panels. The heating elements can be gas-powered or electric, providing the heating temperature required for the reaction. The upper part of the tunnel furnace is provided with holes connected to the gas extraction system to collect the gas materials released during the reaction. The refractory container containing the salt and plastic is located on the moving load bracket. The reaction occurred inside the refractory container progresses whilst the refractory container containing the plastic and salt moves in the tunnel furnace from one end to the other. The temperature inside the tunnel furnace is gradually increased from the room temperature to an adjustable maximum temperature. Then, the temperature is gradually reduced from the maximum temperature, and finally the refractory container exits the tunnel furnace. The post-heat treatment includes the dissolving of the salt content of the heat-treated materials obtained in water followed by the filtration of the suspension to separate the nanostructured carbon product, followed by drying of the nanostructured carbon product, and recycling of the salt. For recycling of the salt from the salt solution, the waste heat from the tunnel furnace is used to evaporate the water content followed by recovering of the salt.

The invention has the advantage that the plastic and the metal halide salt can be heated together, in which the carbonaceous material will be protected from oxidation by the molten salt without the restriction of the mechanical device. Second, molten salts promote further graphitization of carbon materials. As a metal halide salt, NaCl is cheap and has a high boiling point, making it a preferred choice to be used in the process. The carbon nanomaterials formed by this method have a high crystallinity and conductivity, high purity and surface area, and moderate capacitance. These properties make the carbon product suitable for a wide range of applications including conductive carbon additives in energy storage devices, electrode materials for supercapacitors and lithium-sulfur batteries, hydrogen storage adsorbents, photocatalytic support materials, adsorbents, etc.

**Description of Drawings**

Figure 1 shows the XRD pattern of the PET water bottle. The broad diffraction peak in the spectrum corresponds to the (100) crystal plane of the triclinic structure of $C_{10}H_8O_4$.

Figure 2 shows the XRD Pattern of the PET plastic bottle heated overnight at 250°C. The diffraction peaks are indexed to crystalline PET (anorthic) structure.

Figure 3 shows the DSC and TGA thermograms of PET heated at the heating rate of 40°C $min^{-1}$ in an air flow of 100 ml $min^{-1}$.

Figure 4 shows the (a) XRD pattern of PET material heated in air to 620°C and 850°C; (b) SEM images of PET material heated to (c) 620°C and (d) 850°C.

Figure 5 shows (a) XRD patterns and (b) Raman spectra of products obtained by heating of PET with NaCl up to 1100 °C and 1300 °C, followed by the cooling and washing process.

Figure 6 shows a SEM image of the carbon material obtained by the heating of PET and NaCl to 1100°C. (a) The edge of a smooth and irregular particle is exhibited; (b) The presence of graphene nano-flakes on carbon particles is shown; (c) Exhibits a low magnification image demonstrating the graphitisation zones scattered on the surface of irregularly shaped carbon particles; (d) Some areas are highly crystallized into graphene nano-flakes.

Figure 7 shows an optical photograph of the carbon and NaCl obtained by heating of the mixture of PET and NaCl to 1300°C. (a) The mixture inside the alumina crucible; (b) The mixture removed from the crucible.

Figure 8 shows the SEM images of nanostructured carbon materials obtained by heating a mixture of PET and NaC1to1300°C. (a) The presence of graphitic layers is shown; (b) The surface of the carbon material is being peeled off to form graphene nano-flakes; (c) The surface of the graphitic layers of the carbon material and the formation of graphene nano-flakes can be seen more clearly at a higher magnification; (d) The graphene nano-flakes can be seen more clearly at a higher magnification.

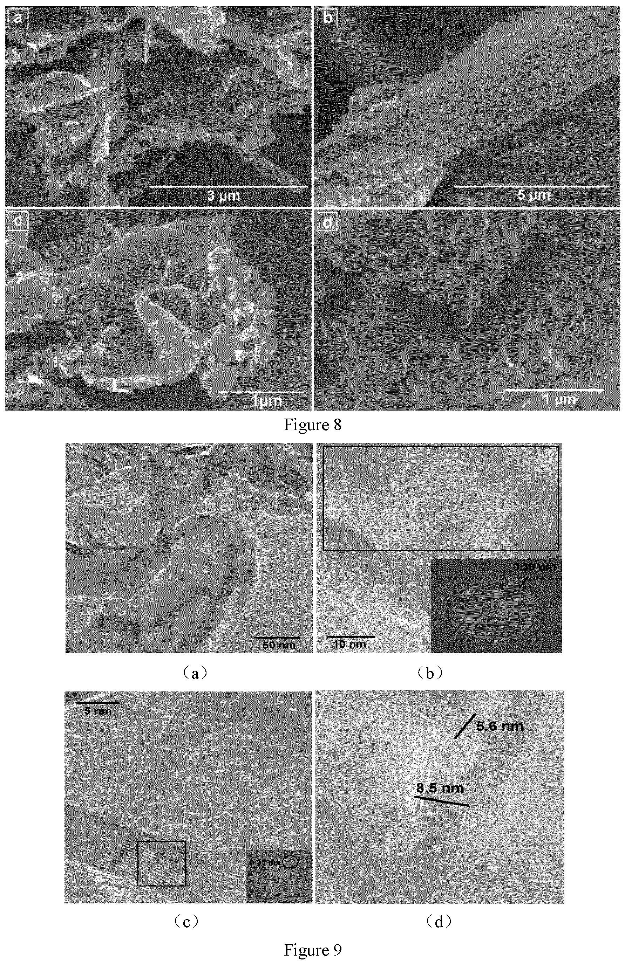

Figure 9 shows transmission electron (TEM) micrograph image of the carbon material obtained by heating PET and NaCl to1300°C. (a) A low magnification image showing the hierarchical morphology of the material consisting of a mixture of nano-flakes and fragmented nano-flakes is exhibited; (b) A high magnification image showing the morphology of the fragmented nano-flakes showing the crystalline fringes of the nano-flakes. The Fast Fourier Transform (FFT) analysis recorded on a number of sheet fragments indicated in the figure can be seen as the inset in (b); (c) A high-resolution TEM image of the carbon sheets exist in the sample with a high crystalline structure. The FFT pattern recorded on a carbon sheet, indicated by black rectangle in the micrograph is shown as the inset in (c), exhibiting spots corresponding to the graphitic nanostructure. (d) The thickness of two graphene nanosheets is identified to be 5.6 nm and 8.5 nm in the micrograph.

Figure 10 shows the Nitrogen adsorption-desorption isotherms of carbon materials obtained by heating PET and NaCl to1300°C.

Figure 11 shows the electrical and electrochemical properties of the carbon nanostructure produced by the heating of PET with NaCl to 1300 °C: (a) V-I relationship, (b) The relationship between the electrical conductivity and the density of the carbon material with the pressure applied, (c) The cyclic voltammetry (CV) characteristics at different scanning rates, (d) The constant current charge and discharge performance of the electrode made of the carbon material at different current densities.

Figure 12 shows the Raman spectrum of the carbon material obtained by heating of the PET plastic bottle with NaF to 1300°C in air, followed by cooling and washing process.

Figure 13 shows Raman spectrum of the carbon material obtained by heating of PET plastic bottle with $MgCl_2 \cdot 6H_2O$ to 1300°C in vacuum, followed by cooling and washing process.

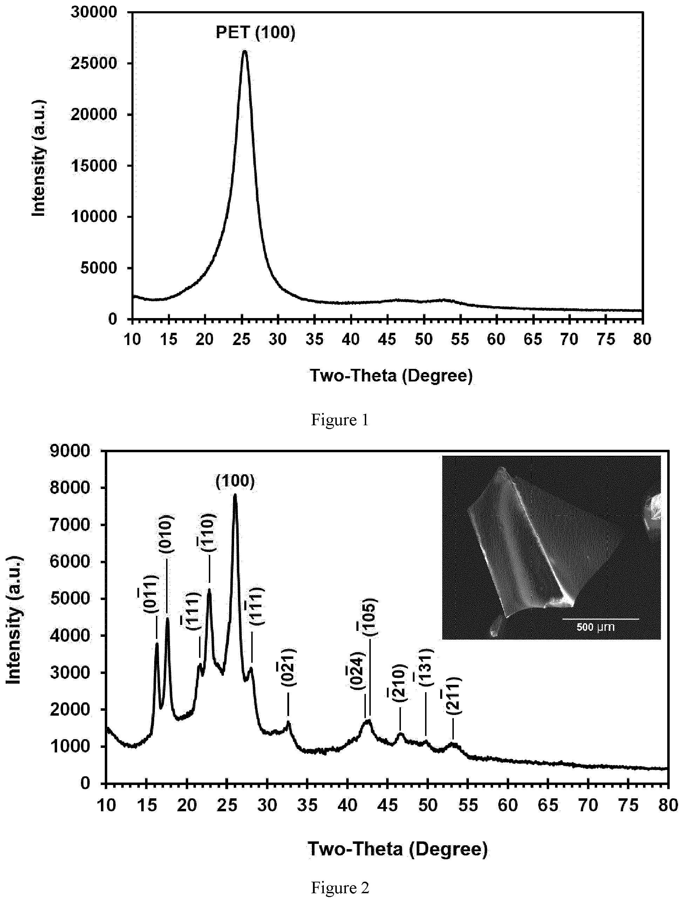

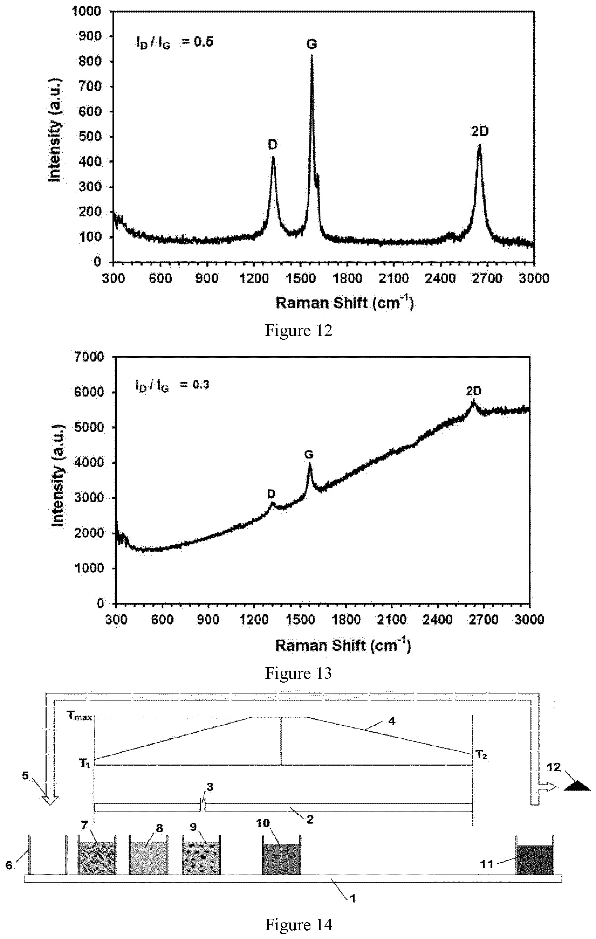

Figure 14 shows a process flow diagram of the preferred process for the continuous production of nanostructured graphitic carbon. Referring to Figure 14, 1 indicates the moving load bracket; 2 indicates the upper part of tunnel furnace; 3 indicates a hole connected to a gas extraction system; 4 shows the temperature profile inside the tunnel furnace; 5 shows the salt recovered from the mixture of nanostructured carbon and salt; 6 shows a refractory container; 7 shows a crucible loaded with a mixture of plastics and salts; 8 indicates the melting of plastic materials; 9 shows the solid salt particles ; 10 shows the nanostructured carbon materials dispersed in molten salts; 11 shows the crucible which is sufficiently cooled, and 12 shows the nanostructured carbon materials.

**Detailed Description**

In order for the invention to be proved, easier to understand and easy to implement by those skilled in the art,, the present invention is described by unrestricted examples combined with the corresponding pictures, charts and micrographs, where:
The preferred reactor, as shown in Figure 14, comprises a tunnel furnace with a moving load bracket. The moving load bracket 1 is made of refractory materials, such as aluminium oxide panels on a metal rail. A controller can adjust its moving speed inside the tunnel furnace. The upper part of the tunnel furnace contains heating elements mounted on the upper refractory panels. The heating elements can be gas-powered or electric. The upper part of the tunnel furnace is provided with a hole connected to a gas extraction system 3. As shown in the temperature profile inside the tunnel furnace 4, the temperature can gradually be increased from the room tem-perature ($T_1$) to an adjustable maximum temperature of $T_{max}$. The maximum temperature is preferentially more than 1100 °C, and more preferentially more than 1200°C or more than 1300 °C. The temperature is gradually reduced from the maximum temperature by moving the load bracket towards the other end of the tunnel furnace to the temperature of $T_2$, which is less than 500°C, or preferentially less than 400°C, or more preferentially less than 300 °C.

The salt recovered from the mixture of nanostructured carbon and salt is shown as (5). The recovered salt is loaded in the refractory container 6, together with pieces of plastic materials. The salt is preferentially a metal halide or a mixture of metal halides. More preferentially the salt is NaCl or contains NaCl. It is because NaCl is cheap and highly available. Moreover, NaCl has an appropriate melting and boiling point of about 800 and 1400°C, indicating that molten NaCl can protect the carbonaceous materials from severe oxidation at high temperatures greater than 900 °C. Also, NaCl has a high solubility in water, and therefore can easily be removed from the system and recovered. The refractory container 6 can be a ceramic crucible such as alumina ($Al_2O_3$). It can also be a carbon crucible such a graphite crucible, provided if the process is carried out under a protective atmosphere, such as argon or nitrogen, to avoid oxidation of the carbon crucible. To start the heat treatment process, a mixture of plastics and salt is loaded into the crucible. The crucible loaded by a mixture of plastics and salts 7 is then moved into the tunnel furnace by the application of the moving load bracket 1. The temperature inside the tunnel furnace is controlled by the heating elements positioned, preferentially, on the upper part of the tunnel furnace 2. The temperature inside the tunnel furnace is gradually increased as indicated in temperature profile inside the tunnel furnace 4. When the temperature inside the tunnel furnace exceeds the melting point of the plastic materials inside the crucible, the melting of plastic materials 8 occurs. By further moving of the crucible forward in the tunnel furnace, the temperature exceeds the decomposition point of the plastic materials. Consequently, the plastic materials decompose into a gas phase which exits the crucible and solid carbonaceous particles mixed with the solid salt particles 9. The gas phase is evacuated from the tunnel furnace through the hole connected to a gas extraction system 3. Whilst the crucible moves forward, the temperature exceeds the melting point of the salt. By further moving of the crucible in the tunnel furnace, the carbonaceous material undergoes an enhanced graphitization, promoted by the molten salt. At $T_{max}$, the graphitization process is accelerated, and the carbonaceous material turn into a nanostructured carbon material dispersed into the molten salt 10. By further moving of the crucible through the tunnel furnace, the temperature decreases to the temperature of $T_1$ at the exit location. $T_1$ is less than 500 °C, or preferentially less than 400°C, or more preferentially less than 300°C. When the crucible is sufficiently cold 11, its content is exposed to distilled water. It can be done by adding water into the crucible. Consequently, the salt is dissolved into water and a suspension comprising the nanostructured carbon and a liquid phase comprising water and salt is formed. The nanostructured carbon can be extracted by filtration of the suspension through a filter paper. A skilled person knows how to separate the nanostructured carbon materials 12 from the suspension. The liquid phase can then be used to recover the salt. It can be done by the evaporation of water to retrieve the salt. The waste heat generated by the tunnel furnace may be used for the evaporation of water. The salt recovered from the mixture of nanostructured carbon and salt 5 is then transferred to the starting point to be mixed with plastic materials.

Unless otherwise specified in the examples, the characterization of the materials was performed according to the following methods: electron microscopy evaluations were carried out using a Nova Nano-SEM 450 equipped with energy dispersive x-ray analyser (EDX) and a 200 kV FEI Tecnai F20 field emission gun high resolution TEM (HRTEM). X-ray diffraction (XRD) patterns were recorded on a Philips 1710 X-ray diffractometer (XRD) with Cu-K$_\alpha$ radiation (k = 1.54 A°) with a step size and a dwell time of 0.05 2θ and 5 s, respectively. The XRD patterns were then analysed using the X'Pert High Score Plus program. Raman spectroscopy was conducted using a Renishaw 1000 Ramanscope with a He-Ne ion laser of a wavelength of 633 nm (red, 1.96 eV). Thermal gravimetry (TG) and differential scanning calorimetry (DSC) were carried out simultaneously using a thermal analyser model SDT-Q600 equipped with alumina crucibles at a heating rate of 40 °C min$^{-1}$ under a constant air flow rate of 100 ml min$^{-1}$ through the sample chamber. Brunauer-Emmett-Teller (BET) surface area analysis was performed by recording nitrogen adsorption/desorption isotherms using a static volumetric technique with a Micromeritics TriStar 3000 V6.04 Aanalyser at -196 °C. The electrical conductivity measurement was conducted by compressing 0.5 g of the carbon material into an acrylic tube (ID = 20.05 mm, H=45.37 mm) using a brass piston (D=20.05 mm, H=85.36 mm) on a copper holder. The carbon powder was compacted using a hydraulic press to build up a pressure on the carbon power up to about 6 MPa. At different pressures, various values of electric currents in the range 0.16-3 A was conducted between the brass piston and the copper holder, and the corresponding potentials were recorded using the four-probe DC method at 20 °C. The electrical resistivity of compressed carbon powder was calculated using the equation:

$$\rho = (S \times V)/(I \times H) \qquad (1)$$

Where $\rho$ is the resistivity ($\mu\Omega\,m$), S is the surface area of the acrylic tube's hole (mm$^2$), V is the potential difference (mV), I is the current (A) and H is the height of the compressed powder (mm). Electrical conductivity was calculated as the reciprocal of electrical resistivity.

The electrochemical capacitance performance of the carbon product was evaluatedusing a three-electrode system, in which the working electrode was prepared by mixing the carbon materials with 10% conductive carbon (SP45 with a BET surface area of 45 m$^2$ g$^{-1}$) and 10% binder (polytetrafluoroethylene, PTFE). The mixture was loaded on a Ni plate of 1.2 cm in diameter, with a mass loading of 3.3 mg cm$^{-2}$. The electrolyte was 6 M KOH. A platinum wire and a saturated calomel electrode (Hg/HgCl n saturated KC1) were employed as the counter and the reference electrode, respectively. Cyclic voltammetry (CV), galvanostatic charge-discharge, and electrochemical impedance spectroscopy (EIS) measurements were performed to evaluate the electrochemical performance. The specific capacitance (F g$^{-1}$) of the supercapacitor fabricated was calculated from the equation:

$$C_s = (I\,\Delta t)/(m\,\Delta V) \qquad (2)$$

where I is the discharge current, $\Delta t$ is discharge time, m is the mass of active material and $\Delta V$ represents the voltage window.

Example 1

Characterization of PET material

The XRD diffraction pattern recorded on small pieces of a water bottle is shown in Figure 1. The pattern can be characterized by a broad peak centered at $2\theta=25.4°$, indicating the short range (100) crystalline domains of PET with an anorthic crystalline configuration ($C_{10}H_8C_4$, JCPDS card No.50-2275). Overall the XRD pattern of Figure 1 represents a low crystalline PET structure.

The low crystalline PET material was heated in a resistance furnace at 260 °C, above the melting point of PET, overnight. After cooling down to the room temperature, the heat treated material obtained, in form of white colour, large and irregular shaped crystalline particles, was subjected to XRD analysis. The diffraction peaks observed in the pattern can be indexed according to the crystalline PET anorthic structure. The most intense (100) reflection peak is observed at 2theta=26.00 degree. The SEM morphology of the crystalline PET is shown as the inset in Figure 2, in which a large size particle with dimensions in excess of 0.5 mm, sharp edges and smooth surfaces can be observed. The EDX analysis of the crystalline PET (Figure 1S) demonstrated a C:O value of 1.8, which is smaller than the theoretical value of atomic C: O ratio of the repeat unit for PET (2.5).

Gonzalez et al. measured the C:O ratio of virgin and plasma-treated PET to be 3 and 1.7, respectively using XPS analysis (E. Gonzalez II, M. D. Barankin, P. C. Guschl, and R. F. Hicks, Remote atmospheric-pressure plasma activation of the surfaces of polyethylene terephthalate and polyethylene naphthalate, Langmuir 24 (2008) 12636-12643). The higher value of C:O measured on virgin PET was attributed to the presence on surface contaminations. On the other hand, the lower value of C:O in plasma treated PET was explained by the presence of more C-O and C=O bonds on the surface of PET induced by the plasma treatment. In our case, the lower value of C: O ratio observed based on the EDX analysis can be attributed to the surface electron irradiation of PET occurred during the microscopy. These observations confirm that the crystallisation of PET occurred during its solidification, and that the plastic bottle was made of pure PET. Such material with a high carbon content and no inorganic component is an attracting source for the preparation of solid carbon materials.

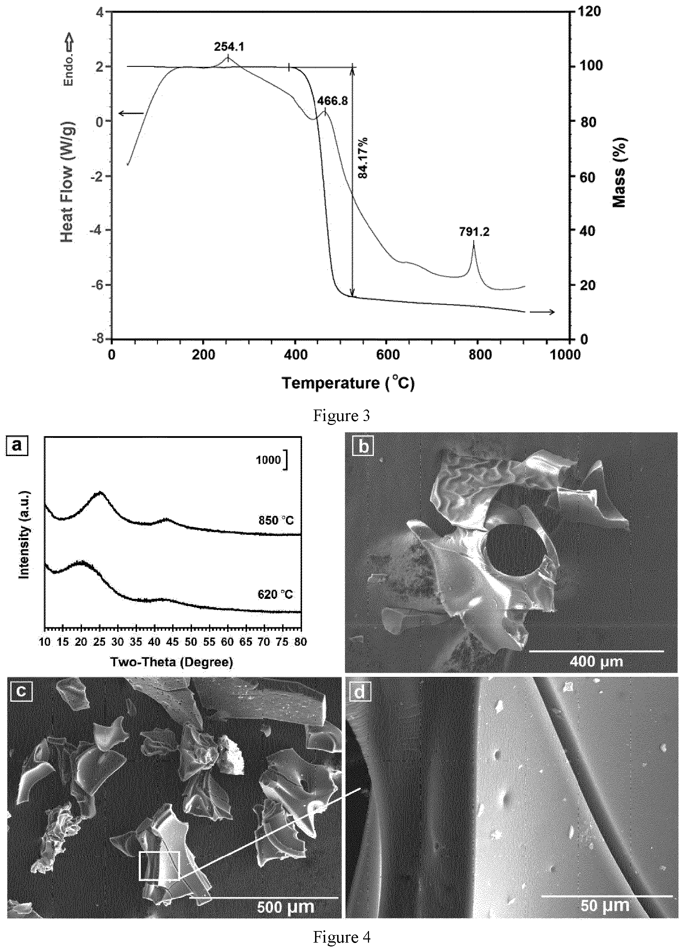

The TGA and DSC thermograms recorded on a small number of PET pieces in the temperature range 25-900°C can be seen in Figure 3. Three endothermic events can be distinguished in the DSC curve observed. The first endothermic peak at 254.1°C is attributed to the melting of PET. The second endothermic peak at 466.8 °C is due to the decomposition of PET, which is accompanied by a mass reduction of 84.17%, according the TGA curve. It can also be seen that the decomposition of PET began at about 390 °C. The last endothermic peak at 791.2 °C might be assigned to the partial graphitization of the residual carbon material.

In order to investigate this endothermic peak, small pieces of a PET plastic was heated in a resistance furnace to 650 °C and 850°C, and the black carbon materials obtained were subjected to XRD and SEM analyses. Figure 4a exhibits the XRD patterns of the samples. The XRD pattern of the sample heated to 620 °C shows two broad reflections centred at $2\theta = 21.2$ and $43.4°$. The first peak, corresponding to an interplanar spacing $d_{(002)}$ of 4.18 Å, can be assigned to the (002) crystalline planes in short-range ordered hexagonal arrays of turbostratic carbon, which is also called disordered graphite or amorphous carbon , produced by the heat treatment of PET at 620 °C. The second broad peak extending from $2\theta=40\text{-}45°$ with a maxima at 43.4° corresponds to overlapping (100) and (101) reflections.

It should be mentioned that in the graphite hexagonal structure (JCPDS card No.13-0148), the (002) reflection appears at the $2\theta= 26.6°$, indicating an interplanar spacing of 3.35 Å. The reflection peaks (100) and (101) appear at the $2\theta$ values of around 42.4 and 44.4°, respectively. The large deviation of $d_{(002)}$ towards a higher value in the turbostratic carbon material produced in comparison to that of graphite indicates the poorly crystalline nature of the material.

Li et. al identified the turbostratic carbon as a variant of hexagonal graphite, in which the (002) carbon layers may randomly translate to each other and rotate about the normal of the layers.

In the XRD pattern of PET heat treated at 850 °C (Figure 4a), the (002) and the (100)/(101) overlapping diffraction peaks exhibit maxima at the $2\theta$ value of 25.2° (corresponding to an interlayer spacing value of 3.54 Å) and 43.2°. The increase in the intensity of the (002) diffraction peak and also its shift towards a larger value, in comparison to the sample prepeared at 620 °C, is indicative of the increase in the crystalline order of the material, hence the occurrence of the graphitization onset.

The endothermic peak appeared in the DSC curve of Figure 3 at 791.2 °C can be attributed to the onset of the graphitization of the turbostratic carbon. It can be seen from the TGA micrograph of Figure 3 that about 10% of the material still remained at 900 °C, where the analysis was terminated.

Further information can be obtained from the SEM morphology of the samples shown in Figures 4b-d. The SEM micrograph of the turbostratic carbon material obtained at 620 °C can be characterized by the presence of large irregular shaped particles with sharp edges and a size up to several hundreds of micrometers. As seen, despite heating in air, there is no sign of oxidation on the material, indicating a high oxidation resistance. The EDX analysis of the sample revealed a C:O ratio of 5.2, which is subsequently higher than that of observed on crystallized PET (1.8). Nevertheless, the presence of a relatively high amount of oxygen in the turbostratic carbon produced at 620 °C is perhaps the main barrier towards full graphitization of the material. The SEM micrographs of the carbon material obtained at 850 °C (Figures 4c and d) show approximately the same features as that observed on the material obtained at 620 °C, characterized by irregular-shaped large particles. However, the high magnification images of Figure 4d shows the presence of small pitting holes on the surface which can be due to the occurrence of minor oxidation. Nevertheless, these micrographs demonstrate the very high oxidation resistance of the material, even at a high temperature of 850 °C.

It is known that the intensive oxidation of carbon materials in air begins at temperatures over 500°C, depending on the properties of the carbon material including its degree of graphitization, particle size and porosity (V. Zh. Shemet, A. P. Pomytkin and V. S. Neshpor, High temperature oxidation behavior of carbon materials in air, Carbon 31 (1993) 1-6). Thermal oxidation of highly oriented pyrolytic graphite was reported by Hahn to occur at 550-950 °C (J.R.Hahn, H. Kang S.M. Lee, Y.H. Lee, Mechanistic study of defect-induced oxidation of graphite, J. Phys Chem B 103 (1999) 9944-51). At temperatures lower than 875 °C, the oxidation process was found to be dominated by the formation of pits at defect sites. At higher temperature, however, the oxidation takes place on both defects and basal planes. It is also kwon that the rate of oxidation of amorphous carbon is higher than that of graphitic carbon materials. Without being limited by mechanism, the high oxidation resistance of the carbon material produced by the pyrolysis of PET in air can be assigned to its large particle sizes, low porosity and perhaps its low density of surface defects.

Example 2

Heat treatment of PET in NaCl was investigated in this example. A plastic water bottle was cut into small pieces (around 10 × 5mm) using a scissor. 9.83 g of plastic pieces was placed into an alumina crucible with an approximate internal diameter and height of 50mm and 100mm, respectively. Then, 50.80 g sodium chloride (NaCl, Aladdin C111533, purity 99.5%) was added to the crucible. The crucible was placed into a resistance furnace and heated in the air atmosphere of the furnace at 20 °C min$^{-1}$ to 1100 °C, and then immediately cooled down with an approximately same heating rate to the room temperature. The black solid mixture of solidified salt and carbon product was placed in sufficient amount of distilled water, in which the salt was dissolved. The carbon product was then recovered from the suspension by vacuum filtration using a filter paper, and left to be dried at 80°C.

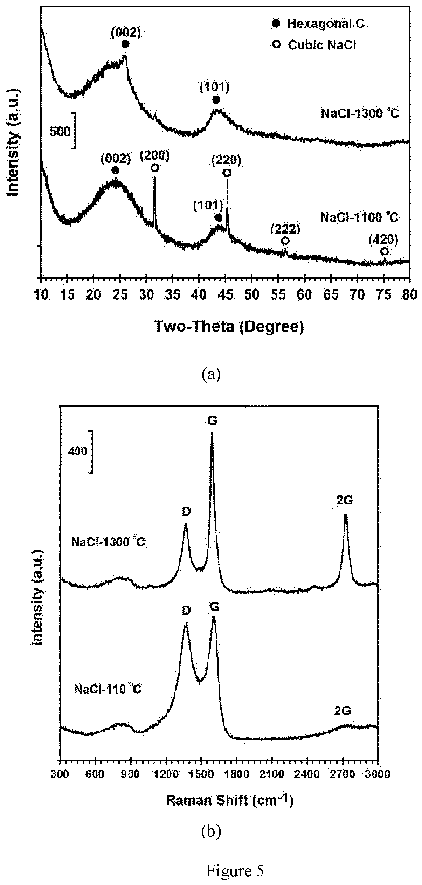

Figure 5 shows the XRD and Raman spectra of the PET-NaCl mixture heated to 1100 °C and 1300 °C (above the melting point of NaCl, 801°C) followed by cooling and washing the NaCl off the product. The XRD pattern of the black carbon product obtained at 1100 °C reveals the presence of diffraction peaks corresponding to the hexagonal carbon and cubic NaCl. The latter is the residual of NaCl which has been remained with the carbon product even after washing process. On the other hand, the (002) reflection of hexagonal carbon structure appeared at $2\theta = 25.13°$ representing an interplanar spacing of 3.54 Å. The broad peak with the maxima at $2\theta = 43.18°$ corresponds to overlapping (100) and (101) reflections.

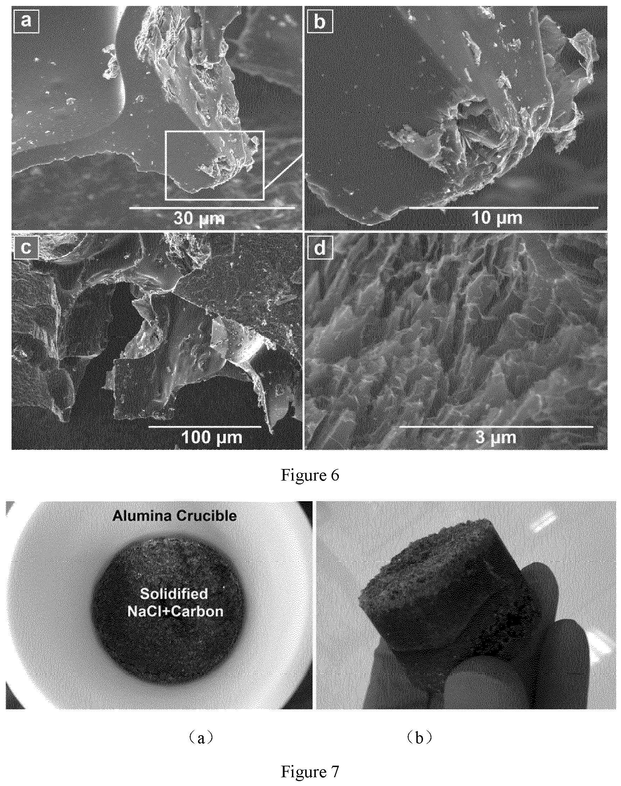

The Raman spectrum of the carbon product produced by the heat treatment of PET in molten NaCl at 1100 °C, shown in the lower panel of Figure 5b, provides information about the graphitic structure of the material. The so-called defect-induced D band and the G band which corresponds to the stretching vibrations of the basal graphene layers in carbon material appeared at the Raman shift values of 1372, 1599 cm$^{-1}$, respectively. Moreover a low intensity 2D band, which is the over tone of D band, can be observed at 2703 cm$^{-1}$. The intensity ratio $I_D/I_G$ that corresponds to the level of defects or inversely to the graphitization degree of the carbon material was measured to be 0.94. Furthermore, the intensity ratio $I_{2D}/I_G$ which represents the quality of the graphene sheets exist in the product is 0.23. Overall, The XRD and Raman analysis demonstrate the presence of nanocrystalline-graphitised domains in the sample. The SEM morphology of the carbon product produced at 1100 °C is presented in Figure 6. Figure 6a shows the edge of an irregular particle with mostly smooth surfaces. This morphology seems overall similar to that observed in the sample prepared by the air heating of PET to 850 °C, with this difference that a number of graphitization zones are present on the smooth surface of the carbon material produced in molten NaCl. Figure 6b clearly shows the presence of graphite flakes appeared on the carbon particle. Figure 6c exhibits a lower magnification image demonstrating that these graphitization zones are scattered on the surface of irregular shaped carbon particles. Some areas were highly crystallized into graphene nanosheets such as shown in the SEM micrograph of Figure 6d. This finding is interesting since it demonstrated that graphitized carbon nanostructures can be formed by simple heating of PET in NaCl to a nearly low temperature of 1100 °C.

**Example 3**

In order to investigate the effect of temperature, the mixture of PET-NaCl in the same weight ratio as that of Example 2, and the mixture was heated to 1300 °C by the same heating rate of 20 °C min$^{-1}$, and then cooled down to the room temperature. Figure 7a, shows crucible and the mixture of salt and carbon product. In order to evaluate the distribution of the carbon phase in the solidified NaCl, the alumina crucible was broken, by which the mixture of salt and carbon was easily retrieved from the crucible (Figure 7b). It can be seen that the carbon material is entirely distributed into the solidified NaCl. This observation is interesting, demonstrating the high dispensability of the carbon product in molten NaCl. The solid mixture was added to 500 ml distilled water. Upon the dissolution of NaCl, the carbon material was floated on the surface of water showing its low density. The suspension obtained was stirred for 20 min and then filtered. The carbon material remained on the filter paper was then dried overnight. The XRD analysis of the sample obtained (Figure 5a), shows the presence of the (002) peak of hexagonal graphite at $2\theta=25.9°$ representing an interlayer spacing of 3.44 Å. The broad peak with a maxima at $2\theta=42.5°$, corresponds to overlapping (100) and (101) reflections. As can be seen, the diffraction peaks related to NaCl have nearly vanished from the pattern, which can be due to the washing procedure. The Raman spectrum of the sample (shown in Figure 5-down panel) provides interesting information about quality of the carbon material produced. The spectrum exhibits a relatively small D band at 1364 cm$^{-1}$, and a sharp and distinguished G band at 1590 cm$^{-1}$. The value of $I_D/I_G$ ratio can be measured from the spectrum to be low at 0.47. This observation reveals the presence of crystalline carbon domains with a low defect density. In addition to this, a symmetric 2D band can also be observed in the spectrum at 2723cm$^{-1}$, and the value of $I_{2D}/I_G$ ratio was found to be 0.52. These observations confirm that the carbon product consisted of carbon entities of few layer graphene.

Figure 8 shows the SEM micrographs of the nanostructured carbon material obtained. The presence of graphitic layers can clearly be observed from Figures 8a and 8d. Figures 8b and 8c, interestingly, demonstrate the surface exfoliation of the graphitic layers of the carbon material, leading to the formation of graphene-like nanosheets. The EDX analysis recorded on the carbon material showed a high C:O atomic ratio of 28.4.

TEM microscopy (Figure 9) provided further evidence for the graphitized carbon nanostructure produced. Figure 9a, exhibits a low magnification image showing the hierarchical morphology of the material consisting of a mixture of nanosheets and fragmented nanosheets. Figure 9b exhibits a high magnification image taken on the area with the latter morphology, showing the crystalline fringes of the nanosheets. The Fast Fourier Transform (FFT) analysis recorded on a number of sheet fragments indicated in the figure can be seen as the inset in Figure 9a. The halo ring in the FFT pattern indicates an interplanar spacing of 3.5 Å , corresponding to the (002) crystalline planes of hexagonal carbon. The micrograph confirms the nanocrystalline nature of the carbon material produced in molten NaCl. The down panels in Figure 9 show high resolution TEM images of the carbon sheets exist in the sample with a high crystalline structure. The FFT pattern recorded on a carbon sheet, indicated in Figure 9c by blackrectangle, exhibits spots corresponding to the graphitic nanostructure. Figure 9d shows several graphitic nanosheets, two of which with thickness of 5.6 nm and 8.5 nm have been identified in the micrograph. The careful examination of the carbon product revealed that graphitic sheets consisted of 4-20 layers with a thickness of less than 10nm.

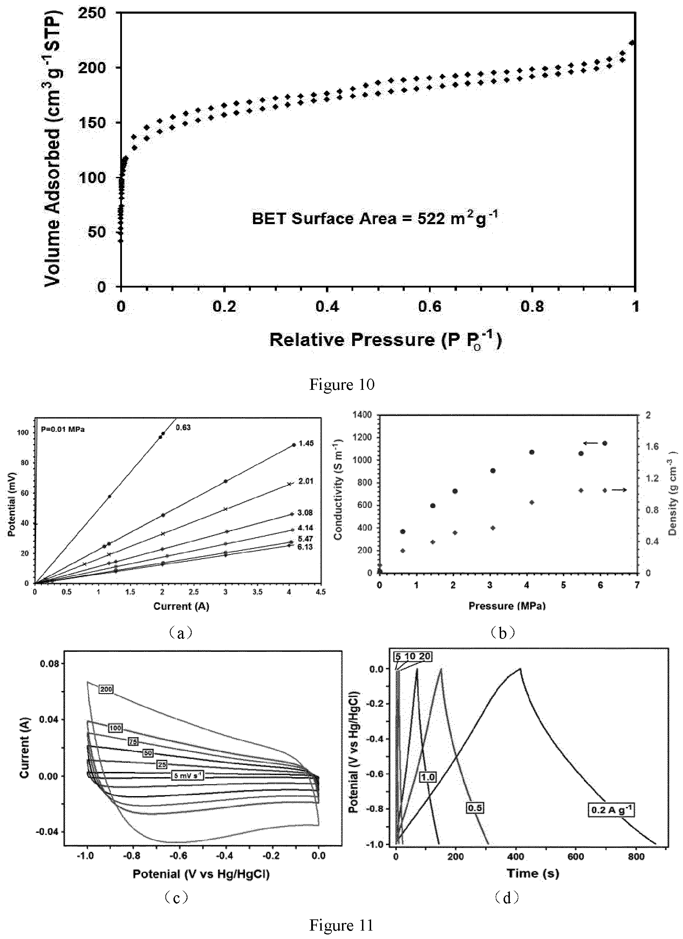

The surface properties of the nanostructured carbon material were studied through the nitrogen adsorption-desorption technique, and the recorded isotherm is presented in Figure 10. According to the IUPAC classification, this curve displays a type-II isotherm and a type-H4 hysteresis loop, suggesting the presence of non-porous or macroporous surfaces with narrow slit like pores. The BET surface area of carbon material was found to be 522 m$^2$ g$^{-1}$.

The results obtained confirm that the heat treatment of PET in molten NaCl leads to the preparation of a carbon nanostructure consisting crystalline graphitic nanosheets and sheet fragments with a thickness of less than 10nm, and a high surface area.

It should be mentioned that, together with surface area and crystallinity, the electrical conductivity is one of the most important parameters which determine the performance of carbon materials in practical applications such as supercapacitors, electromagnetic shielding, catalysts, and metal-ion batteries. However, in carbon materials, often the electrical conductivity decreases with the increase in surface area.

Example 4

Nanostructured graphite was produced as explained in Example 3. The electrical conductivity of the carbon material produced was evaluated at various compression pressures using the four probe method. Figure 11a shows the current-voltage response of the carbon material at different pressures, in the range 0.01-6.13 MPa, applied to 0.5 g sample, showing a perfect Ohmic response. The values of density, calculated by considering the column height of the compressed powder, and those of electrical conductivity of the sample were plotted as the function of the pressure applied, and the result is exhibited in Figure 11b. As it can be seen, the density of the carbon powder under a light pressure of 0.10 MPa is 0.10 g cm$^{-3}$ exhibiting an electrical conductivity of 12.53 S m$^{-1}$. By increasing the pressure to 4.14 MPa, the density and conductivity increase considerably to 0.89 g cm$^{-3}$ and 1071.24 S m$^{-1}$, respectively. As can be depicted from the plot, the density increased to 1.04 g cm$^{-3}$ by a further increase of pressure to 5.47 MPa, but the corresponding conductivity slightly decreased to 1058.43 S m$^{-1}$. As can be observed from Figure 11a, the resistance of the sample, indicated by the slope of the I-V curve decreased from 8.76 m$\Omega$ to 6.79 m$\Omega$ by the same increase in pressure. The decrease in the value of electrical conductivity by the increase of pressure observed can be explained by the contribution of the reduced column height of the compressed powder to the value of electrical conductivity (equation 1). It can be seen that the values of density and conductivity increased to 1.06 g cm$^{-3}$ and 1150.15 S m$^{-1}$ by the increase of the pressure to 6.13 MPa. The conductivity obtained is rather impressive.

Example 5

Nanostructures graphite was produced as explained in Example 3. The Electrochemical behavior of the carbon product was evaluated using a three-electrode system with 6 M KOH as the electrolyte. The CV profiles, recorded at various scan rates of 5-200 mV s$^{-1}$, shown in Figure 11c, exhibit nearly rectangular shapes, indicating that the carbon product stores charge mainly via an electrochemical double layer capacitive mechanism, with a reasonable rate performance and no pseudocapacitive effect. It further confirms the high carbon purity and electrical conductivity of the sample.

Figure 11d shows the potential-time profiles measured at deferent current densities in the range 0.2 to 20 A g$^{-1}$. As can be seen, the discharge time is roughly equal to the charging time, and the curves are almost isosceles triangle, indicating a high reversibility. According to the galvanostatic charge/discharge curves, the specific capacitances could be calculated to be 90.2, 78.6, 73.0, 58.0, 50.0 and 40.0 F g$^{-1}$ at current densities of 0.2, 0.5, 1.0, 5.0, 10.0 and 20 A g$^{-1}$, respectively.

Example 6

100 g Sodium fluoride (NaF) was mixed with 20g PET plastic pieces. The mixture was placed in an alumina crucible and heated to a maximum temperature of 1300 °C, and held at this temperature for 1h in an electric furnace in air. The crucible was then allowed to be cooled down, and the salt was washed off using sufficient amount of water followed by the filtration of the suspension obtained. The black carbon material obtained on the filter paper was dried at 80 °C for 2h. The Raman spectrum of the carbon material obtained is shown in Figure 12. The Raman spectrum clearly show the presence of D, G and 2D bands at 1322, 1571 and 2640 cm$^{-1}$, respectively, characteristic of graphitic structures. The intensity ratio $I_D/I_G$ can be calculated from the spectrum to be 0.5, representing a high degree of graphitization. The 2D band in the Raman spectrum is intense and symmetric, representing the presence of few layer graphene.

**Example 7**

50g MgCl$_2$•6H$_2$O was mixed with 10g PET plastic pieces, and the mixture was placed in an alumina crucible and treated according to the heat treatment and washing process explained in the previous Example 6, with the only difference that the heating process was conducted in a tube furnace under a vacuum of 10$^{-2}$ mbar. The Raman spectrum of the carbon material obtained is shown in Figure 13. The D, G and 2D band, characteristic of graphitic carbon materials was observed at 1307, 1567 and 2620 cm$^{-1}$, respectively. The Raman ration $I_D/I_G$ in the carbon material was calculated from the spectrum to be 0.3, representing a high degree of graphitization.

The process of producing conductive nanostructured graphitized carbon can be carried out in a continuous manner in the tunnel furnace, as shown in Figure 14. The tunnel furnace provides continuous operation for the preparation of nanostructured carbon.

**Claims**

1. A method for extracting carbon materials from plastics, wherein nanostructured carbon materials are produced by heating a mixture consisting of at least one plastic and at least one metal halide salt to a heating temperature in the range defined as: the melting point of the salt≤heating temperature ≤ the boiling point of the salt+ 50 °C.

2. A method for extracting carbon materials from plastics according to claim 1, wherein the salt is a hydrated metal halide salt.

3. A method for extracting carbon materials from plastics according to claims 1 or 2, wherein the heating temperature is above the melting point of the metal halide salts, and less than the boiling temperature of the salts, by which a mixture of nanostructured carbon materials and salts is produced; after the mixture is cooled down, the salts are dissolved by water followed by filtration to retrieve the nanostructured carbon materials and the solution of the water and the salts; the nanostructured carbon materials are collected after drying and the salts are recycled from the solution.

4. A method for extracting carbon materials from plastics according to claims 1 or 2, wherein the conductivity of the synthesized nanostructured carbon material is greater than 1000 S m$^{-1}$ or the value of Raman $I_D/I_G$ is less than 0.5.

5. A method for extracting carbon materials from plastics according to claims 1 or 2, wherein the salt is one metal halide salt or a mixture of metal halide salts selected from the group consisting of LiCl, NaCl, KCl, MgCl$_2$, CaCl$_2$, NaF and ZnCl$_2$; the salt can be a hydrated metal halide salt or a mixture of more than one hydrated metal halide salt selected from the group consisting of hydrated forms of LiCl, NaCl, KCl, MgCl$_2$, CaCl$_2$, NaF and ZnCl$_2$.

6. A method for extracting carbon materials from plastics according to claims 1 or 2, wherein the plastics include at least one of polyethylene, polypropylene, polyethylene terephthalate, polystyrene, polyvinyl chloride, polylactide, polycarbonate, acrylic acid, nylon and ABS resin or synthetic rubbers.

7. A method for extracting carbon materials from plastics according to claims 1 or 2, wherein the heating is carried out in air, inert gas atmosphere, nitrogen atmosphere or vacuum conditions; when the heating atmosphere is an inert gas or nitrogen, the atmosphere contains $H_2$ above 0.1% volume fraction.

8. A method for extracting carbon materials from plastics according to claim 1 or 2, wherein the nanostructured carbon produced has one or more of the following properties: surface area of greater than 500 $m^2 g^{-1}$; capacitance of greater than 70 F $g^{-1}$; having a graphitic structure; having a symmetrical Raman 2D band; containing graphene nanolayers with the number of layers of less than 20 layers, with a flake thickness of less than 10 nm.

9. A method for extracting carbon materials from plastics according to claims 1 or 2, wherein the metal halide salt is NaCl and the plastic is polyethylene terephthalate (PET), and the heating temperature is above 1100°C.

10. An equipment by which the method for extracting carbon materials from plastics according to any one of claims 1-9 is implemented, **characterized in that** the equipment includes a tunnel furnace with a moving load bracket; the moving load bracket is made of refractory materials or covered with alumina panels fitted on a metallic rail; the upper part of the tunnel furnace is provided with heating elements installed on refractory materials; the heating element can be gas or electricity powdered, providing temperature needed for the reaction; the upper part of the tunnel furnace is provided with a hole connected to a gas extraction system for collecting the gaseous substances released during the reaction process; a refractory container is placed on the moving load bracket, in which the salt and the plastic are loaded, and moves with the moving load bracket during the reaction from one end of the tunnel furnace to the other end, within which the temperature increases and then decreases, and finally the refractory container comes out of the tunnel furnace; a post-treatment and the recycling device is used to treat the reaction products obtained from the refractory container by water after the heating process, by which the salt is dissolved, followed by filtering the suspended nanostructured carbon materials, and dry out the final product; the waste heat from the tunnel furnace is used to evaporate the excess water of the filtration liquid to recover the reactant salt for reuse.

Figure 1

Figure 2

Figure 3

Figure 4

(a)

(b)

Figure 5

Figure 6

（a）                                    （b）

Figure 7

Figure 8

（a）　　　　　　　　　　（b）

（c）　　　　　　　　　　（d）

Figure 9

Figure 10

（a）

（b）

（c）

（d）

Figure 11

Figure 12

Figure 13

Figure 14

## INTERNATIONAL SEARCH REPORT

| International application No. |
| --- |
| **PCT/CN2018/087797** |

**A.     CLASSIFICATION OF SUBJECT MATTER**

C01B 32/15(2017.01)i;  B09B 3/00(2006.01)i

According to International Patent Classification (IPC) or to both national classification and IPC

**B.     FIELDS SEARCHED**

Minimum documentation searched (classification system followed by classification symbols)

C01B32; B09B3

Documentation searched other than minimum documentation to the extent that such documents are included in the fields searched

DWPI; SIPOABS; CJFD; CNABS; CNKI; USTXT; EPTXT; WOTXT; ISI web of science; google; STN: 东北大学, 中国科学院长春应用化学研究所, 塑料, 碳纳米, 碳材料, 纳米, 卤化物, 金属, 氟, 氯, 溴, 碘, 聚对苯二酸酯, plastic?, carbon nano+, halide, metal, chloride, fluoride, bromide, iodide, PET

Electronic data base consulted during the international search (name of data base and, where practicable, search terms used)

**C.     DOCUMENTS CONSIDERED TO BE RELEVANT**

| Category* | Citation of document, with indication, where appropriate, of the relevant passages | Relevant to claim No. |
| --- | --- | --- |
| A | CN 1830767 A (CHANGCHUN INSTITUTE OF APPLIED CHEMISTRY, CHINESE ACADEMY OF SCIENCES) 13 September 2006 (2006-09-13) see entire document, especially pages 2 and 3 | 1-10 |
| A | CN 102115076 A (UNIVERSITY OF SCIENCE AND TECHNOLOGY OF CHINA) 06 July 2011 (2011-07-06) see entire document, especially pages 1-3, paragraphs 5-25 | 1-10 |
| A | GONG, Jiang et al. "Sustainable Conversion of Mixed Plastics into Porous Carbon Nanosheets with High Performances in Uptake of Carbon Dioxide and Storage of Hydrogen" *ACS Sustainable Chemistry & Engineering*, Vol. 2, No. 12, 20 October 2014 (2014-10-20), ISSN: 2168-0485, see entire document, especially page 2838, right column, the last paragraph | 1-10 |
| A | M.N.M.Hatta et al. "Synthesis of Carbon Nanostructures from High Density Polyethylene (HDPE) and Polyethylene Terephthalate (PET) Waste by Chemical Vapour Deposition" *Journal of Physics: Conference Series*, Vol. 914, 23 July 2017 (2017-07-23), ISSN: 1742-6588, see entire document, especially page 1, the abstract | 1-10 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **19 July 2018** | **14 September 2018** |

| Name and mailing address of the ISA/CN | Authorized officer |
| --- | --- |
| **State Intellectual Property Office of the P. R. China (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2018/087797**

| Patent document cited in search report | | | Publication date (day/month/year) | Patent family member(s) | | | Publication date (day/month/year) |
|---|---|---|---|---|---|---|---|
| CN | 1830767 | A | 13 September 2006 | CN | 100443401 | C | 17 December 2008 |
| CN | 102115076 | A | 06 July 2011 | None | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **A. JOSEPH BERKMANS ; M. JAGANNATHAM ; S. PRIYANKA ; P. HARIDOSS.** Synthesis of branched, nano channeled, ultrafine and nano carbon tubes from PET wastes using the arc discharge method. *Waste Management,* 2014, vol. 34, 2139-2145
- **M.N.M.HATTA ; M.S.HASHIM ; R. HUSSIN ; S. AIDA ; Z. KAMDI ; A.R. AINUNDDIN ; M.Z. YUNOS.** Synthesis of carbon nanostructures from high density polyethylene (HDPE) and polyethylene terephthalate (PET) waste by chemical vapour deposition. *Journal of Physics: Conference Series,* 2017, vol. 914, 012029
- **P. YU ; X. ZHAO ; Z. HUANG ; Y. LIA ; Q. ZHANG.** Free-standing three-dimensional graphene and polyaniline nanowire arrays hybrid foams for high-performance flexible and lightweight supercapacitors. *Journal of Materials Chemistry A,* 2014, vol. 2, 14413-14420
- **N. A. EL ESSAWY ; S. M. ALI ; H. A. FARAG ; A. H. KONSOWA ; M. ELNOUBY ; H. A. HAMAD.** Green synthesis of graphene from recycled PET bottle wastes for use in the adsorption of dyes in aqueous solution. *Ecotoxicology and Environmental Safety,* 2017, vol. 145, 57-68
- **P. RAI ; K. P. SINGH.** Valorization of Poly (ethylene) terephthalate (PET) wastes into magnetic carbon for adsorption of antibiotic from water: Characterization and application. *Journal of Environmental Management,* 2018, vol. 207, 249-261
- **J.B. PARRA ; C.O. ANIA ; A. ARENILLAS ; F. RUBIERA ; J.J. PIS ; J.M. PALACIOS.** Structural-changes in polyethylene terepthalate (PET) waste materials caused by pyrolysis and $CO_2$ activation. *Adsorption Science & Technology,* 2006, vol. 24, 439-449
- **E. GONZALEZ II ; M. D. BARANKIN ; P. C. GUSCHL ; R. F. HICKS.** Remote atmospheric-pressure plasma activation of the surfaces of polyethylene terephthalate and polyethylene naphthalate. *Langmuir,* 2008, vol. 24, 12636-12643
- **V. ZH. SHEMET ; A. P. POMYTKIN ; V. S. NESHPOR.** High temperature oxidation behavior of carbon materials in air. *Carbon,* 1993, vol. 31, 1-6
- **J.R.HAHN ; H. KANG ; S.M. LEE ; Y.H. LEE.** Mechanistic study of defect-induced oxidation of graphite. *J. Phys Chem B,* 1999, vol. 103, 9944-51